# EUROPEAN PATENT APPLICATION

(11) **EP 4 819 273 A1**
(43) Date of publication of application: **07.10.2026**
(21) Application number: 24895496.8
(22) Date of filing: 29.05.2024
(51) Int. Cl.: H01M 10/0525, H01M 4/587

(54) **SECONDARY BATTERY AND ELECTRONIC DEVICE**

(30) Priority: 30.11.2023 CN 202311643835
(71) Applicant: Contemporary Amperex Technology Co., Limited, Ningde, Fujian 352100 (CN)
(72) Inventor: WU, Kai, Ningde, Fujian 352100 (CN); LIN, Xieji, Ningde, Fujian 352100 (CN); LI, Yuanyuan, Ningde, Fujian 352100 (CN); SHEN, Rui, Ningde, Fujian 352100 (CN); HE, Libing, Ningde, Fujian 352100 (CN)
(74) Representative: Gong, Jinping
(86) International application number: PCT/CN2024/096003
(87) International publication number: WO 2025/112386

(57) **Abstract**

Provided are a secondary battery and an electric device. The secondary battery includes a negative electrode plate, the negative electrode plate includes a negative electrode current collector and a negative electrode film layer on at least one surface of the negative electrode current collector, the negative electrode film layer includes a negative electrode active material, and the negative electrode active material includes a first carbon-based material and a second carbon-based material. The first carbon-based material has a pore structure, and the total pore area S2 of an internal region of the first carbon-based material is larger than the total pore area S1 of an external region of the first carbon-based material; and the second carbon-based material satisfies ID/IG≤0.140.

## Description

### CROSS-REFERENCE TO RELATED APPLICATION

The present disclosure is presented based on Chinese Patent Application No. 202311643835.4, filed on November 30, 2023 and entitled "SECONDARY BATTERY AND ELECTRIC DEVICE", and claims priority to the Chinese Patent Application, the content of which is incorporated herein by reference in its entirety.

### TECHNICAL FIELD

The present disclosure relates to the technical field of batteries, and in particular, to a secondary battery and an electric device.

### BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, and aerospace. Currently, as the application range of secondary batteries becomes increasingly widespread, the performance of secondary batteries faces great challenges. For example, for the development of various green energy sources, secondary batteries are required to have higher storage performance and energy density.

### SUMMARY

The present disclosure is made in view of the above problems and is intended to provide a secondary battery and an electric device. The secondary battery has improved storage performance and energy density.

A first aspect of the present disclosure provides a secondary battery. The secondary battery includes a negative electrode plate, where the negative electrode plate includes a negative electrode current collector and a negative electrode film layer on at least one surface of the negative electrode current collector. The negative electrode film layer includes a negative electrode active material. The negative electrode active material includes a first carbon-based material and a second carbon-based material. The first carbon-based material includes an external region and an internal region located inside the external region. The external region refers to a region extending from the surface of the first carbon-based material to the interior of the particle by a distance of 2.5 µm. In a cross-sectional view of the first carbon-based material, the first carbon-based material has a pore structure, and with the total pore area of the external region being denoted as S1 and the total pore area of the internal region being denoted as S2, the first carbon-based material satisfies S2 > S1. The second carbon-based material satisfies I_{D}/I_{G} ≤ 0.140, where the I_{D} denotes the D peak intensity at 1350 ± 50 cm⁻¹ in the Raman spectrum of the second carbon-based material, and the I_{G} denotes the G peak intensity at 1580 ± 50 cm⁻¹ in the Raman spectrum of the second carbon-based material.

The total pore area S1 of the external region of the first carbon-based material is less than the total pore area S2 of the internal region. This means that the structure of the external region of the first carbon-based material is denser than that of the internal region. Compared to traditional natural graphite materials, the stability of the material is improved, and the specific capacity is increased, but the storage performance is still not ideal. The second carbon-based material satisfies I_{D}/I_{G} ≤ 0.140, indicating that the material has fewer surface defects, reduced side reactions, less active lithium consumption, and thus good initial coulombic efficiency, and can improve the storage performance of the battery. As a result, in the present disclosure, the negative electrode active material obtained by combining the first carbon-based material and the second carbon-based material gives full play to the advantages of the first carbon-based material and the second carbon-based material, thereby improving the storage performance and energy density of the secondary battery.

In some embodiments, the second carbon-based material satisfies 0.10 ≤ I_{D}/I_{G} ≤ 0.14, optionally, 0.11 ≤ I_{D}/I_{G} ≤ 0.13. When the second carbon-based material satisfies the above I_{D}/I_{G} range, it is beneficial to improving the initial coulombic efficiency and storage performance of the secondary battery.

In some embodiments, the I_{D}/I_{G} of the first carbon-based material is greater than the I_{D}/I_{G} of the second carbon-based material.

In some embodiments, the first carbon-based material satisfies I_{D}/I_{G} ≤ 0.30, optionally 0.15 ≤ I_{D}/I_{G} ≤ 0.28.

By adjusting the I_{D}/I_{G} values of the first and second carbon-based materials, the reactivity of the negative electrode active material can be reduced, such that the side reactions between the negative electrode active material and the electrolytic solution are reduced, which is beneficial to improving the storage performance of the secondary battery.

In some embodiments, the second carbon-based material is artificial graphite. Artificial graphite has a relatively dense structure with almost no pores within the particles, resulting in reduced side reactions and thereby achieving good storage performance and cycle performance.

In some embodiments, the interlayer spacing of the 002 crystal plane of the first carbon-based material is less than the interlayer spacing of the 002 crystal plane of the second carbon-based material. Optionally, the interlayer spacing of the 002 crystal plane of the first carbon-based material is ≤ 0.33569 nm, optionally 0.33557 nm to 0.33569 nm. Optionally, the interlayer spacing of the 002 crystal plane of the second carbon-based material is ≤ 0.336088 nm, optionally 0.335744 nm to 0.336088 nm. When the interlayer spacing of the 002 crystal plane falls within the above range, the first carbon-based material exhibits a high degree of graphitization and a high specific capacity. Therefore, the energy density of the battery can be effectively improved. The small interlayer spacing of the 002 crystal plane of the second carbon-based material indicates a high degree of graphitization of the second carbon-based material, and the high degree of graphitization enables the second carbon-based material to have a high specific capacity and powder compaction density, which is beneficial to improving the energy density of the secondary battery.

In any embodiment, the first carbon-based material includes one or more pore structures with a pore area of greater than or equal to 0.15 µm², and optionally includes one or more pore structures with a pore area of 0.15 µm² to 2.0 µm². The inclusion of the pore structures of the above size in the internal region of the first carbon-based material can reserve a sufficient and stable expansion space for the volume change of the particles of the first carbon-based material and improve the compaction density of the negative electrode film layer, thus improving the energy density of the secondary battery.

In some embodiments, the first carbon-based material satisfies: 1.5 ≤ S2/S1 ≤ 450, optionally 2 ≤ S2/S1 ≤ 400. When the S2/S1 of the first carbon-based material falls within the above range, the first carbon-based material has balanced specific capacity and stability and thus improved storage performance, such that the secondary battery has good energy density and cycle performance.

In some embodiments, the first carbon-based material includes a primary particle. Optionally, the number proportion of the primary particle in the first carbon-based material is ≥ 80%. The first carbon-based material is mainly present in the form of the primary particle, which is beneficial to maintaining the low side reactivity thereof and reducing the occurrence of side reactions, thereby further improving the storage performance of the secondary battery. Optionally, the surface of the first carbon-based material has no coating layer. The absence of the carbon coating layer on the surface of the first carbon-based material can reduce the surface reactivity, which is beneficial to the storage performance of the secondary battery.

In some embodiments, the second carbon-based material includes a primary particle. Optionally, the number proportion of the primary particle in the second carbon-based material is ≥ 80%. Optionally, the surface of the second carbon-based material has no coating layer. Similarly, the second carbon-based material is mainly present in the form of primary particles, and moreover, has no carbon coating layer on the surface, which is beneficial to maintaining a low side reactivity on the surface of the particle and reducing the occurrence of side reactions, thereby further improving the storage performance of the secondary battery and reducing the impact on the energy density.

In some embodiments, the degree of graphitization of the first carbon-based material is greater than the degree of graphitization of the second carbon-based material. When the two materials are combined, the high degree of graphitization of the first carbon-based material can increase the specific capacity of the negative electrode active material, which is beneficial to improving the energy density of the secondary battery.

In some embodiments, the degree of graphitization of the first carbon-based material is ≥ 96%, optionally 96.5% to 98.5%; and/or the degree of graphitization of the second carbon-based material is 91% to 96.5%, optionally 92% to 96%. The degrees of graphitization of the first carbon-based material and the second carbon-based material within the above range enable the secondary battery to achieve a high energy density.

In some embodiments, the specific surface area of the first carbon-based material is greater than the specific surface area of the second carbon-based material. The adjustment of the specific surface areas of the first and second carbon-based materials can reduce the occurrence of side reactions and the consumption of active ions due to the formation of the SEI film, thereby helping improve the cycle performance and storage performance while achieving a high initial coulombic efficiency.

In some embodiments, the specific surface area of the first carbon-based material is less than or equal to 2.1 m²/g, optionally 1.3 m²/g to 2.1 m²/g, and the specific surface area of the second carbon-based material is less than or equal to 1.3 m²/g, optionally 0.8 m²/g to 1.2 m²/g. When the specific surface areas of the first carbon-based material and the second carbon-based material separately fall within the above ranges, the secondary battery may have improved storage performance without compromising the cycle performance.

In any embodiment, the volume distribution particle size Dv50 of the first carbon-based material is greater than the volume distribution particle size Dv50 of the second carbon-based material.

In some embodiments, the negative electrode active material satisfies at least one of the following:
(1) The volume distribution particle size Dv50 of the negative electrode active material is ≥ 10 µm, optionally 10 µm to 23 µm.
(2) The volume distribution particle size Dv90 of the negative electrode active material is ≤ 40 µm, optionally 23 µm to 40 µm.
(3) The particle size distribution [(Dv90)-(Dv10)]/(Dv50)] of the negative electrode active material is ≤ 1.20, optionally 0.9 to 1.20.
(4) The specific capacity of the negative electrode active material is ≥ 358 mAh/g, optionally 358 mAh/g to 370 mAh/g.
(5) The negative electrode active material satisfies I_{D}/I_{G} ≤ 0.2, optionally 0.13 to 0.20, wherein the I_{D} denotes the D peak intensity at 1350 + 50 cm⁻¹ in a Raman spectrum, and the I_{G} denotes the G peak intensity at 1580 ± 50 cm⁻¹ in the Raman spectrum.

By combining the first carbon-based material and the second carbon-based material having the above properties, a negative electrode active material having any one of the above properties (1) to (5) with improved overall storage performance and specific capacity can be obtained, thereby improving the storage performance and energy density of the secondary battery without compromising the cycle performance.

In some embodiments, the first carbon-based material satisfies at least one of the following:
(1) The volume distribution particle size Dv50 of the first carbon-based material is ≥ 13 µm, optionally 15 µm to 25 µm.
(2) The volume distribution particle size Dv90 of the first carbon-based material is ≤ 40 µm, optionally 28 µm to 40 µm.

The particles of the first carbon-based material have a large particle size. The volume distribution particle size Dv50 and/or Dv90 thereof within the above range is beneficial to reducing the specific surface area of the first carbon-based material, reducing side reactions, and improving the storage performance of the secondary battery.
(3) The particle size distribution [(Dv90)-(Dv10)]/(Dv50)] of the first carbon-based material is ≤ 1.55, optionally 0.90 to 1.50. A particle size distribution of the first carbon-based material within the foregoing range may result in good particle packing efficiency of the first carbon-based material, thereby helping improve the compaction density of the negative electrode film layer and increase the energy density of the secondary battery.
(4) The specific capacity of the first carbon-based material is ≥ 360 mAh/g, optionally 365 mAh/g to 372 mAh/g. A specific capacity of the first carbon-based material within the above range can provide the secondary battery improved energy density.

When the first carbon-based material further has any one of the above properties (1) to (5), it is beneficial to at least one of the storage performance, the energy density, and the cycle performance of the secondary battery.

In some embodiments, the second carbon-based material satisfies at least one of the following:
(1) The volume distribution particle size Dv50 of the second carbon-based material is ≤ 18 µm, optionally 13 µm to 18 µm. A volume distribution particle size Dv50 of the second carbon-based material within the above range can reduce the specific surface area of the second carbon-based material and side reactions and improve the storage performance of the secondary battery.
(2) The particle size distribution [(Dv90)-(Dv10)]/(Dv50)] of the second carbon-based material is ≤ 1.35, optionally 1.0 to 1.30. A particle size distribution of the second carbon-based material within the foregoing range may result in good particle packing efficiency of the second carbon-based material, thereby helping improve the compaction density of the negative electrode film layer and further increase the energy density of the secondary battery.
(3) The specific capacity of the second carbon-based material is ≥ 357 mAh/g, optionally 357 mAh/g to 363 mAh/g. A specific capacity of the second carbon-based material within the above range can improve the energy density of the secondary battery.

A second carbon-based material further having any one of the above properties (1) to (3) can improve at least one of the storage performance, the energy density, and the cycle performance of the secondary battery.

In some embodiments, the mass proportion of the first carbon-based material in the negative electrode active material is ≥ 30wt%, optionally 50 wt% to 80 wt%. A mass proportion of the first carbon-based material in the negative electrode active material within the above range can give play to the advantages of the first carbon-based material and the second carbon-based material, so as to acquire improved storage performance without compromising the energy density.

In some embodiments, the negative electrode active material further includes a silicon-based material. The silicon-based material can serve to improve the pore passage structure in the negative electrode film layer, thereby facilitating the infiltration and the liquid retention of the electrolytic solution, and improving the kinetics performance of the secondary battery. In addition, the negative electrode capacity can also be improved, thereby further improving the energy density of the secondary battery.

In some embodiments, the negative electrode film layer satisfies at least one of the following:
(1) The compaction density of the negative electrode film layer is ≥ 1.40 g/cm³, optionally 1.45 g/cm³ to 1.90 g/cm³.
(2) The areal density of the negative electrode film layer is ≥ 6.0 g/cm², optionally 7.0 g/cm² to 15 g/cm².
(3) The porosity of the negative electrode film layer is 18.0% to 36.7%, optionally 19.0% to 34.0%.
(4) The thickness of the negative electrode film layer is ≥ 70 µm, optionally 90 µm to 130 µm.

When the negative electrode film layer has any one of the above properties (1) to (4), it is beneficial to at least one of the storage performance and the energy density of the secondary battery.

A second aspect of the present disclosure further provides an electric device. The electric device includes the secondary battery according to the embodiments of the first aspect of the present disclosure.

The electric device of the present disclosure includes the secondary battery according to any of the embodiments of the first aspect described above, and thus has at least the same advantages as the secondary battery.

### BRIEF DESCRIPTION OF THE DRAWINGS

FIG. 1 is a schematic view of a cross-sectional image of a particle of a first carbon-based material according to the present disclosure.
FIG. 2 is an ion-polished cross-section profile (CP) image of a first carbon-based material according to an embodiment of the present disclosure.
FIG. 3 is a schematic view of a battery cell according to one embodiment of the present disclosure.
FIG. 4 is an exploded view of the battery cell according to one embodiment of the present disclosure shown in FIG. 3.
FIG. 5 is a schematic view of a battery module according to one embodiment of the present disclosure.
FIG. 6 is a schematic view of a battery pack according to one embodiment of the present disclosure.
FIG. 7 is an exploded view of the battery pack according to one embodiment of the present disclosure shown in FIG. 6.
FIG. 8 is a schematic view of an electric device using the secondary battery according to one embodiment of the present disclosure as the power source.

Description of the reference numerals:
1: battery pack; 2: upper case body; 3: lower case body; 4: battery module; 5: battery cell; 51: housing; 52: electrode assembly; 53: top cover assembly

### DETAILED DESCRIPTION

Hereinafter, the embodiments of the secondary battery and the electric device of the present disclosure are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present disclosure and are not intended to limit the subject matter recited in the claims.

The "ranges" disclosed in the present disclosure are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a particular parameter, it will be appreciated that ranges of 60 to 110 and 80 to 120 are also anticipated. Additionally, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present disclosure, unless otherwise specified, the numerical range "a to b" indicates an abbreviated representation of any combination of real numbers between a and b, where both a and b are real numbers. For example, the numerical range "0 to 5" indicates that all real numbers between 0 and 5 are listed herein, and "0 to 5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present disclosure may be combined with one another to form new technical solutions.

Unless otherwise specified, all technical features and optional technical features of the present disclosure may be combined with one another to form new technical solutions.

Unless otherwise specified, all steps of the present disclosure can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b) and (c), or steps (a), (c) and (b), or steps (c), (a) and (b), or the like.

Unless otherwise specified, the terms used in the present disclosure have well-known meanings that are commonly understood by those skilled in the art.

Unless otherwise specified, the values of the parameters mentioned in the present disclosure can be measured by various test methods commonly used in the art. For example, they can be measured according to the test methods given in the present disclosure.

Unless otherwise specified, in the present disclosure, the term "active ion" refers to an ion that can be intercalated and deintercalated back and forth between the positive and negative electrodes of the secondary battery, including but not limited to, lithium ion, and the like.

In order to improve the storage performance of the secondary battery, it is desirable to use a carbon material having a stable surface and few internal defects, such as artificial graphite. However, such a material tends to have an unsatisfactory specific capacity, resulting in a low energy density of the secondary battery. Natural graphite has a high degree of graphitization and a high specific capacity. In addition, pores inside natural graphite allow for high compaction density, thereby increasing the capacity density of the secondary battery. However, the natural graphite has numerous surface defects, and the porous structure causes many side reactions, resulting in low initial coulombic efficiency, which reduces the storage performance of the secondary battery. In addition, during the charging and discharging process, the material is prone to expansion, resulting in an unsatisfactory cycle life of the secondary battery. The expansion of the natural graphite particles can be suppressed to a certain extent by carbon coating. However, the carbon coating layer often forms amorphous carbon, which has high reactivity and is not conducive to the storage performance of the secondary battery. In addition, when the energy density of the secondary battery is increased by, for example, increasing the compaction density of the negative electrode film layer, the electrolytic solution infiltration characteristics of the negative electrode film layer under high compaction density are deteriorated, and the risk of breakage of negative electrode active material particles is increased, thereby causing an increase in internal side reactions of the battery, and further affecting the storage performance of the secondary battery.

Therefore, it is often difficult to combine a high energy density with good storage performance and cycle life in existing secondary batteries.

In view of this, a first aspect of the embodiments of the present disclosure provides a secondary battery.

The term "secondary battery" described herein refers to a battery cell, a battery module, or a battery pack.

Typically, the secondary battery cell includes a positive electrode plate, a negative electrode plate, an electrolyte, and a separator. During the charging and discharging process of the battery, active ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate to primarily prevent the positive and negative electrodes from short-circuiting while allowing the passage of ions.

### [Negative Electrode Plate]

The secondary battery of the present disclosure includes a negative electrode plate. The negative electrode plate includes: a negative electrode current collector, and a negative electrode film layer on at least one surface of the negative electrode current collector and including a negative electrode active material. The negative electrode active material includes a first carbon-based material and a second carbon-based material. The first carbon-based material includes an external region and an internal region located inside the external region. The external region refers to a region extending from the surface of the first carbon-based material to the interior of the particle by a distance of 2.5 µm. In a cross-sectional view of the first carbon-based material, the first carbon-based material has a pore structure, and with the total pore area of the external region being denoted as S1 and the total pore area of the internal region being denoted as S2, the first carbon-based material satisfies S2 > S1. The second carbon-based material satisfies I_{D}/I_{G} ≤ 0.140, where the I_{D} denotes the D peak intensity at 1350 + 50 cm⁻¹ in the Raman spectrum of the second carbon-based material, and the I_{G} denotes the G peak intensity at 1580 ± 50 cm⁻¹ in the Raman spectrum of the second carbon-based material.

In the present disclosure, the total pore area S1 of the external region of the first carbon-based material is less than the total pore area S2 of the internal region. This means that the structure of the external region of the first carbon-based material is denser than that of the internal region. In addition, that the first carbon-based material in the present disclosure satisfies "S1 > S2" means that the first carbon-based material is provided with pore structures that can be directly observed from a cross-sectional image (e.g., a scanning electron microscope image with 1000-fold magnification). That is, a part of the pore structures in the body structure of the first carbon-based material, particularly the pores in the external region, have a significantly smaller area than the pores in the internal region.

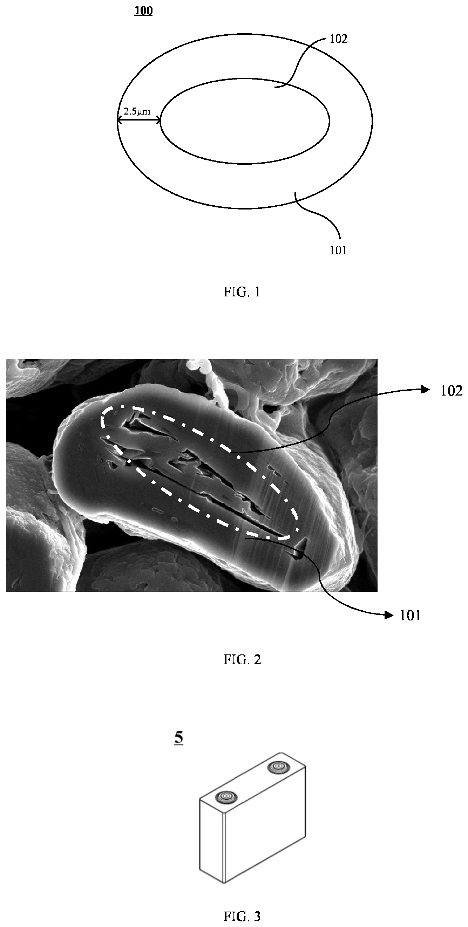

Referring to FIG. 1, shown is a schematic view of a cross-sectional image of a particle of a first carbon-based material 100 according to the present disclosure, and the cross-sectional image passes through the center of the particle of the first carbon-based material 100. As shown in FIG. 1, the region extending from the surface of the particle of the first carbon-based material 100 to the interior of the particle by a distance of 2.5 µm is denoted as the external region 101, and the region inside the external region 101 is denoted as the internal region 102.

The pore structure in the first carbon-based material may be observed by a cross-section polisher, for example, by performing an ion-polished cross-section profile (CP) test on the negative electrode plate. Specifically, the negative electrode plate can be cut into samples to be tested with a certain size (e.g., 2 cm × 2 cm), and fixed on a sample stage with paraffin. The sample stage is placed into a sample holder and locked in place, and an argon ion cross-section polisher (e.g., the IB-09010 CP argon ion cross-section polisher from JEOL Ltd., Japan) is turned on and evacuated (e.g., 10⁻⁴ Pa). After setting the argon flow (e.g., 0.15 MPa), voltage (e.g., 8 kV), and polishing time (e.g., 2 h), the sample stage is adjusted to an oscillation mode to begin polishing. A certain area in the first region 1021 of the sample to be tested is randomly selected for scanning (e.g., scanning using a scanning electron microscope with reference to JY/T010-1996), and the ion-polished cross-section profile (CP) image of the negative electrode plate is obtained at a certain magnification (e.g., 1000-fold). As shown in FIG. 2, it can be seen that the first carbon-based material has a certain number of pores in the internal region near the center of the particle, while the external region near the surface of the particle exhibits a denser structure.

The second carbon-based material of the present disclosure satisfies I_{D}/I_{G} ≤ 0.140. The I_{D}/I_{G} value reflects the degree of disorder of carbon on the material surface to a certain extent. A lower value indicates fewer surface defects of the material, a lower degree of disorder of carbon, lower reactivity, fewer side reactions with the electrolytic solution, less consumption of active ions, and higher initial coulombic efficiency, which is beneficial to improving the storage performance of the secondary battery.

According to the above definition, a particle of the first carbon-based material satisfying S2 > S1 is beneficial to the stability of the material, and may reduce the expansion during the charging and discharging cycle and increase the specific capacity, thereby helping improve the energy density of the secondary battery and the cycle performance. However, the storage performance of the first carbon-based material is still insufficient. Mixing with a second carbon-based material satisfying I_{D}/I_{G} ≤ 0.140 may compensate for the insufficiency of the storage performance of the first carbon-based material. Thereby, a secondary battery with improved energy density and storage performance is obtained.

In some embodiments, the second carbon-based material satisfies 0.10 ≤ I_{D}/I_{G} ≤ 0.14, optionally, 0.11 ≤ I_{D}/I_{G} ≤ 0.13. A second carbon-based material satisfying the above I_{D}/I_{G} range may have high surface stability, reduced side reactions with the electrolytic solution, and reduced consumption of active ions, and may improve the initial coulombic efficiency of the negative electrode, thereby facilitating the storage performance of the secondary battery, including the improvement of high-temperature storage performance.

In some embodiments, the I_{D}/I_{G} of the first carbon-based material is greater than the I_{D}/I_{G} of the second carbon-based material.

In some embodiments, the first carbon-based material satisfies I_{D}/I_{G} ≤ 0.30, optionally 0.15 ≤ I_{D}/I_{G} ≤ 0.28.

When the I_{D}/I_{G} value of the first carbon-based material is within the above range, the surface properties of the material are relatively stable, such that the overall reactivity of the negative electrode active material can be reduced, the side reactions between the negative electrode active material and the electrolytic solution are fewer, and the secondary battery has further improved storage performance.

In some embodiments, the second carbon-based material is artificial graphite. Artificial graphite has a relatively dense structure with almost no pores within the particles, resulting in reduced side reactions and thereby achieving good storage performance.

In the present disclosure, the artificial graphite generally refers to crystalline carbon obtained through high-temperature graphitization treatment, and the particle generally does not have pore structures, or does not have pore structures that can be directly observed from a cross-sectional image (e.g., a scanning electron microscope image with 1000-fold magnification). As a result, the cross-section of the negative electrode plate obtained using the above cross-section polisher can be distinguished from the first carbon-based material under a microscope.

Mixing the second carbon material of artificial graphite having excellent storage performance and cycle performance with the first carbon material having high specific capacity and improved cycle performance can provide the secondary battery a high energy density, high storage performance, and good cycle performance.

In some embodiments, the interlayer spacing of the 002 crystal plane of the first carbon-based material is less than the interlayer spacing of the 002 crystal plane of the second carbon-based material. In the present disclosure, by adjusting the interlayer spacing of the 002 crystal planes of the two carbon-based materials, a negative electrode active material is obtained by combining the first and second carbon-based materials, which respectively exhibit good storage performance and specific capacity. The small interlayer spacing of the 002 crystal plane of the first carbon-based material contributes a lot to the high specific capacity.

According to some embodiments, the interlayer spacing of the 002 crystal plane of the first carbon-based material is ≤ 0.33569 nm, optionally 0.33557 nm to 0.33569 nm. According to some embodiments, the interlayer spacing of the 002 crystal plane of the second carbon-based material is ≤ 0.336088 nm, optionally 0.335744 nm to 0.336088 nm. The small interlayer spacing of the 002 crystal plane of the first carbon-based material reflects that the material has a high degree of graphitization and thus a high specific capacity, and can effectively improve the energy density of the secondary battery. The small interlayer spacing of the 002 crystal plane of the second carbon-based material reflects that the second carbon-based material also has a high degree of graphitization, and the high degree of graphitization enables the second carbon-based material to have a high specific capacity and powder compaction density, which is beneficial to improving the energy density of the cell.

In some embodiments, the first carbon-based material includes one or more pore structures with a pore area of greater than or equal to 0.15 µm², and optionally includes one or more pore structures with a pore area of 0.15 µm² to 2.0 µm².

In the material (e.g., the first carbon-based material) of the present disclosure, that "the internal region has a pore structure" means that the material has a pore structure that can be directly observed from a cross-sectional image (e.g., a scanning electron microscope image with 1000-fold magnification), that is, the first carbon-based material has a pore structure in the body structure. More specifically, at least the interior of the body structure has a pore structure.

The inclusion of the pore structures of the above size in the internal region of the first carbon-based material can reserve a sufficient and stable expansion space for the volume change of the particles of the first carbon-based material, thus facilitating the cycle life of the secondary battery.

In some embodiments, the first carbon-based material satisfies: 1.5 ≤ S2/S1 ≤ 450, optionally, 2 ≤ S2/S1 ≤ 400. Illustratively, the first carbon-based material satisfies: 2.0 ≤ S₂/S₁ ≤ 400, 2.4 ≤ S₂/S₁ ≤ 300, 2.5 ≤ S₂/S₁ ≤ 250, 2.6 ≤ S₂/S₁ ≤ 200, 2.8 ≤ S₂/S₁ ≤ 150, or 3.0 ≤ S₂/S₁ ≤ 100. The S2/S1 of the first carbon-based material within the above range reflects the small pore structure in the external region of the particle and the dense structure, which can help reduce the side reactions between the first carbon-based material and the electrolytic solution, the formation of the SEI film inside the particle, and the loss of the active substance, while improving the stability of the material. Therefore, the first carbon-based material has balanced specific capacity and stability and thus improved storage performance, such that the secondary battery has good energy density and cycle performance.

In some embodiments, the first carbon-based material includes a primary particle. Optionally, the number proportion of the primary particle in the first carbon-based material is greater than or equal to 80%. Exemplarily, the number proportion of the primary particle in the first carbon-based material is greater than or equal to 80%, 85%, 90%, 95%, or even 100%. Advantageously, the first carbon-based material is predominantly the primary particles. The primary particles help maintain the stability of the surface of the first carbon-based material, thereby reducing side reactions and facilitating the storage performance and high energy density of the secondary battery.

In some embodiments, the surface of the primary particle of the first carbon-based material has no coating layer. The conventional carbon coating layer on the surface of the carbon-based material is soft carbon with a low specific capacity and high consumption of active ions, resulting in deteriorated storage performance. Therefore, when the first carbon-based material has no coating layer, it is beneficial to maintaining the low side reactivity thereof and reducing the occurrence of side reactions, thereby preserving the storage performance of the secondary battery, without adversely affecting the capacity density of the secondary battery.

In some embodiments, the second carbon-based material includes a primary particle. Optionally, the number proportion of the primary particle in the second carbon-based material is greater than or equal to 80%. Exemplarily, the number proportion of the primary particle in the second carbon-based material is greater than or equal to 80%, 85%, 90%, 95%, or even 100%. Similarly, the second carbon-based material is advantageously predominantly primary particles. The primary particles help maintain the stability of the surface of the first carbon-based material, thereby reducing side reactions and facilitating the storage performance of the secondary battery.

In some embodiments, the surface of the primary particle of the second carbon-based material has no coating layer. Similarly, when the second carbon-based material has no primary particle of the coating layer, it is beneficial to maintaining the low side reactivity thereof and reducing the occurrence of side reactions, thereby further improving the storage performance of the secondary battery, without adversely affecting the capacity density of the secondary battery.

In some embodiments, the degree of graphitization of the first carbon-based material is greater than the degree of graphitization of the second carbon-based material. Adjusting the degrees of graphitization of the first carbon-based material and the second carbon-based material can increase the specific capacity of the negative electrode active material, thereby facilitating the improvement of the energy density of the secondary battery.

In some embodiments, the degree of graphitization of the first carbon-based material is greater than or equal to 96.0%, optionally 96.5% to 98.5%. Exemplarily, the degree of graphitization of the first carbon-based material may be 96.0%, 96.5%, 97.0%, 97.5%, 98.0%, 98.5%, or a value between any two of the values. By adjusting the degree of graphitization of the first carbon-based material within the above range, it is beneficial to increasing the specific capacity of the negative electrode active material, thereby improving the energy density of the secondary battery.

In some embodiments, the degree of graphitization of the second carbon-based material is 91% to 96.5%, optionally 92% to 96%. Exemplarily, the degree of graphitization of the first carbon-based material may be 91.5%, 92%, 92.5%, 93%, 93.5%, 94%, 94.5%, 95%, 95.5%, 96%, or a value between any two of the values. Selecting a second carbon-based material with a high degree of graphitization not only provides good storage performance but also enhances the energy density of the secondary battery.

In some embodiments, the BET specific surface area of the first carbon-based material is greater than the BET specific surface area of the second carbon-based material.

In some specific embodiments, the BET specific surface area of the first carbon-based material is ≤ 2.1 m²/g, optionally 1.3 m²/g to 2.1 m²/g. Exemplarily, the surface area of the first carbon-based material may be 1.3 m²/g, 1.5 m²/g, 1.7 m²/g, 1.9 m²/g, 2.1 m²/g, or a value between any two of the values. Since the internal region of the first carbon-based material has a pore structure, compared to the second carbon material including artificial graphite having a dense overall structure, the specific surface area is increased. Controlling the specific surface area of the first carbon-based material to be less than or equal to 2.1 m²/g can reduce the reactivity of the first carbon-based material, which is beneficial to the storage performance of the secondary battery.

In some specific embodiments, the specific surface area of the second carbon-based material is less than or equal to 1.3 m²/g, optionally 0.8 m²/g to 1.2 m²/g. Exemplarily, the surface area of the second carbon-based material may be 0.8 m²/g, 0.9 m²/g, 1.0 m²/g, 1.1 m²/g, 1.2 m²/g, 1.3 m²/g, or a value between any two of the values.

The reduced specific surface area of the first and second carbon-based materials can reduce the reactivity of the materials, the occurrence of side reactions, and the consumption of active ions due to the formation of the SEI film, and thereby provides a high initial coulombic efficiency, which is beneficial to the cycle performance and storage performance.

In some embodiments, the volume distribution particle size Dv50 of the first carbon-based material is greater than the volume distribution particle size Dv50 of the second carbon-based material.

In some embodiments, the tap density of the first carbon-based material is greater than the tap density of the second carbon-based material.

When the first carbon-based material and the second carbon-based material satisfying the above design are combined as the negative electrode active material, the negative electrode active material satisfies one or more of the following characteristics, thereby enabling the secondary battery to have good energy density and storage performance without compromising the cycle life.

The volume distribution particle size Dv50 of the negative electrode active material is ≥ 10 µm, optionally 10 µm to 23 µm.

The volume distribution particle size Dv90 of the negative electrode active material is ≤ 40 µm, optionally 23 µm to 40 µm.

The particle size distribution [(Dv90)-(Dv10)]/(Dv50)] of the negative electrode active material is ≤ 1.20, optionally 0.9 to 1.20.

The specific capacity of the negative electrode active material is ≥ 358 mAh/g, optionally 358 mAh/g to 370 mAh/g.

The negative electrode active material satisfies I_{D}/I_{G} ≤ 0.2, optionally 0.13 to 0.2, wherein the I_{D} denotes the D peak intensity at 1350 ± 50 cm⁻¹ in a Raman spectrum, and the I_{G} denotes the G peak intensity at 1580 ± 50 cm⁻¹ in the Raman spectrum.

By combining the first carbon-based material and the second carbon-based material having the above properties, a negative electrode active material having any one of the above properties with improved overall storage performance and specific capacity can be obtained, thereby improving the storage performance and energy density of the secondary battery without compromising the cycle performance.

In some embodiments, in addition to satisfying the above design, when the first carbon-based material further satisfies one or more of the following conditions, the adverse effect on the reaction performance of the material surface can be further reduced, the specific capacity can be increased, and the performance of the secondary battery can be further improved; for example, at least one of the energy density, the storage performance, the cycle performance, and the like of the secondary battery is further improved.

In some embodiments, the volume distribution particle size Dv50 of the first carbon-based material is ≥ 13 µm, optionally 15 µm to 25 µm. Exemplarily, the volume distribution particle size Dv50 of the first carbon-based material is 15 µm, 17 µm, 20 µm, 23 µm, 25 µm, etc., or a value in a range formed by any two of the values, which, however, is not limiting.

In some embodiments, the volume distribution particle size Dv90 of the first carbon-based material is ≤ 40 µm, optionally 28 µm to 40 µm. Exemplarily, the volume distribution particle size Dv90 of the first carbon-based material is 28 µm, 30 µm, 33 µm, 35 µm, 37 µm, 40 µm, etc., or a value in a range formed by any two of the values, which, however, is not limiting.

The particles of the first carbon-based material have a large particle size. The volume distribution particle size Dv50 and/or Dv90 thereof within the above range is beneficial to reducing the specific surface area of the first carbon-based material, reducing side reactions, and improving the storage performance of the secondary battery.

In some embodiments, the particle size distribution [(Dv90)-(Dv10)]/(Dv50)] of the first carbon-based material is ≤ 1.55, optionally 0.90 to 1.50. Exemplarily, the particle size distribution [(Dv90)-(Dv10)]/(Dv50)] of the first carbon-based material is 0.90, 1.00, 1.10, 1.20, 1.30, 1.40, 1.50, 1.55, etc., or a value in a range formed by any two of the values, which, however, is not limiting. A particle size distribution of the first carbon-based material within the foregoing range may result in good particle packing efficiency of the first carbon-based material, thereby helping improve the compaction density of the negative electrode film layer and increase the energy density of the secondary battery.

In some embodiments, the specific capacity of the first carbon-based material is ≥ 360 mAh/g, optionally 365 mAh/g to 372 mAh/g. A specific capacity of the first carbon-based material within the above range can provide the secondary battery improved energy density.

In some embodiments, in addition to satisfying the above design, when the second carbon-based material further satisfies one or more of the following conditions, at least one of the following aspects can be achieved while maintaining good cycle performance: further reduced reactivity of the negative electrode active material, improved specific capacity of the negative electrode active material, and improved compaction density of the negative electrode film layer. As a result, the performance of the secondary battery can be further improved; for example, at least one of the energy density, the storage performance, the cycle performance, and the like of the secondary battery is further improved.

In some embodiments, the volume distribution particle size Dv50 of the second carbon-based material is ≤ 18 µm, optionally 13 µm to 18 µm. Illustratively, the volume distribution particle size Dv50 of the second carbon-based material is 13 µm, 14 µm, 15 µm, 15.5 µm, 16 µm, 17 µm, 18 µm, etc., or a value between any two of the values. A volume distribution particle size Dv50 of the second carbon-based material within the above range can reduce the specific surface area of the second carbon-based material and side reactions and improve the storage performance of the secondary battery.

In some embodiments, the particle size distribution [(Dv90)-(Dv10)]/(Dv50)] of the second carbon-based material is ≤ 1.35, optionally 1.0 to 1.35. Illustratively, the particle size distribution [(Dv90)-(Dv10)]/(Dv50)] of the second carbon-based material is 1.0, 1.1, 1.15, 1.2, 1.25, 1.3, 1.35, etc., or a value between any two of the values. A particle size distribution of the second carbon-based material within the foregoing range may result in good particle packing efficiency of the second carbon-based material, thereby helping improve the compaction density of the negative electrode film layer and further increase the energy density of the secondary battery.

In some embodiments, the specific capacity of the second carbon-based material is greater than or equal to 357 mAh/g, optionally 357 mAh/g to 363 mAh/g. Illustratively, the specific capacity of the second carbon-based material is 357 mAh/g, 359 mAh/g, 360 mAh/g, 361 mAh/g, 362 mAh/g, 363 mAh/g, etc., or a value between any two of the values. A specific capacity of the second carbon-based material within the above range can improve the energy density of the secondary battery.

In some embodiments, in the negative electrode active material, the mass proportion of the first carbon-based material is ≥ 30 wt%, optionally 50 wt% to 80 wt%. Illustratively, in the negative electrode active material, the mass proportion of the first carbon-based material is 50 wt%, 55 wt%, 60 wt%, 65 wt%, 70 wt%, 75 wt%, 80 wt%, or a value between, or in a range formed by, any two of the values.

A mass proportion of the first carbon-based material in the negative electrode active material within the above range can give play to the advantages of the first carbon-based material and the second carbon-based material, so as to acquire improved storage performance without compromising the cycle performance and energy density.

In some embodiments, in the negative electrode active material, the mass proportion of the second carbon-based material is ≤ 70 wt%, optionally 20 wt% to 50 wt%. Illustratively, in the negative electrode active material, the mass proportion of the second carbon-based material is 20 wt%, 25 wt%, 30 wt%, 35 wt%, 40 wt%, 45 wt%, 50 wt%, etc., or a value between, or in a range formed by, any two of the values.

In some embodiments, the negative electrode active material consists of the first carbon-based material and the second carbon-based material described above.

In other embodiments, the negative electrode active material further includes an additional negative electrode active material known in the art, such as a silicon-based material. The silicon-based material can serve to improve the pore passage structure in the negative electrode film layer, thereby facilitating the infiltration and the liquid retention of the electrolytic solution, and improving the kinetics performance of the secondary battery. In addition, the negative electrode capacity can also be improved, thereby further improving the energy density of the secondary battery.

The silicon-based material may be selected from at least one of elemental silicon, a silicon-oxygen compound, a silicon-carbon composite, a silicon-nitrogen composite, and a silicon alloy.

In some embodiments, the mass proportion of the silicon-based material in the negative electrode active material is less than or equal to 10%, optionally 3% to 10%. Therefore, the energy density of the secondary battery can be improved without compromising the cycle performance and storage performance of the secondary battery.

In some embodiments, the negative electrode film layer further optionally includes a conductive agent. The conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes other auxiliary agents, such as a thickener (e.g., sodium carboxymethylcellulose (CMC-Na)).

It has been found through further research that when the negative electrode film layer satisfies one or more of the following conditions, the performance of the secondary battery can be further improved; for example, at least one of the energy density, the storage performance, the cycle performance, and the like of the secondary battery is further improved.

In some embodiments, the compaction density of the negative electrode film layer is ≤ 1.40 g/cm³, optionally 1.45 g/cm³ to 1.90 g/cm³. Exemplarily, the compaction density of the negative electrode film layer is 1.40, 1.50, 1.60, 1.70, 1.80, 1.90, etc., or a value in a range formed by any two of the values, which, however, is not limiting. A compaction density of the negative electrode film layer within the above range is beneficial to achieving a high capacity in the negative electrode film layer, thereby facilitating combining a high storage performance with a high energy density in the secondary battery.

In some embodiments, the areal density of the negative electrode film layer is ≥ 6.0 g/cm², optionally 7.0 g/cm² to 15 g/cm². Exemplarily, the compaction density of the negative electrode film layer is 6.0 g/cm², 7.0 g/cm², 8.0 g/cm², 9.0 g/cm², 10.0 g/cm², 11.0 g/cm², 12.0 g/cm², 13.0 g/cm², 14.0 g/cm², 15.0 g/cm², etc., or a value in a range formed by any two of the values.

An areal density of the negative electrode film layer within the above range is beneficial to achieving a high capacity in the negative electrode film layer, thereby facilitating combining a high energy density with good storage performance in the secondary battery.

In some embodiments, the porosity of the negative electrode film layer is 18.0% to 36.7%, optionally 19.0% to 34.0%. Exemplarily, the compaction density of the negative electrode film layer is 18.0%, 20.0%, 22.0%, 24.0%, 26.0%, 28.0%, 30.0%, 32.0%, 34.0%, etc., or a value in a range formed by any two of the values. Therefore, this is beneficial to achieving a high capacity in the negative electrode film layer, thereby facilitating combining a high energy density with favorable storage performance in the secondary battery.

In any embodiment, the thickness of the negative electrode film layer is ≥ 70, optionally 90 µm to 130 µm. Exemplarily, the thickness of the negative electrode film layer is 70 µm, 80 µm, 90 µm, 100 µm, 110 µm, 120 µm, 130 µm, etc., or a value in a range formed by any two of the values.

In some embodiments, a metal foil or a composite current collector may be used as the negative electrode current collector. For example, as the metal foil, a copper foil may be used. The composite current collector may include a polymer material base layer and a metal layer formed on at least one surface of the polymer material substrate. The composite current collector may be formed by forming a metal material (copper, copper alloy, nickel, nickel alloy, titanium, titanium alloy, silver, silver alloy, and the like) on the polymer material substrate (such as a substrate made of polypropylene (PP), polyethylene terephthalate (PET), polybutylene terephthalate (PBT), polystyrene (PS), and polyethylene (PE)).

In some embodiments, the negative electrode plate can be prepared in the following manner: dispersing the components described above for preparing the negative electrode plate, such as the above negative electrode active material including the first carbon-based material and the second carbon-based material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

The above embodiments are described only by taking the composition of the negative electrode film layer on one side surface of the negative electrode current collector as an example. It will be appreciated that the negative electrode current collector is provided with two surfaces opposite to each other in its own thickness direction, and the negative electrode film layer described in the above embodiments is disposed on any one or both of the two opposite surfaces of the negative electrode current collector. It should be noted that the parameters of the negative electrode film layer provided in the present disclosure (e.g., compaction density, areal density, porosity, thickness) refer to the parameters of the negative electrode film layer on one side of the negative electrode current collector. When the negative electrode film layer is disposed on both sides of the negative electrode current collector, if the parameters of the negative electrode film layer on either side meet the requirements of the present disclosure, it shall be considered to fall within the protection scope of the present disclosure.

In the present disclosure, the negative electrode plate described above does not exclude additional functional layers other than the negative electrode film layer. For example, in some embodiments, the negative electrode plate further includes a conductive bottom coating (e.g., composed of a conductive agent and a binder) interposed between the negative electrode current collector described above and the negative electrode film layer described above and disposed on the surface of the negative electrode current collector described above. In some embodiments, the negative electrode plate further includes a protective layer covering the surface of the negative electrode film layer described above.

In the present disclosure, for the total pore area S1 of the external region and the total pore area S2 of the internal region of the material (e.g., the first carbon-based material), the cross-section of the carbon material can be acquired using a cross-section polisher (e.g., the IB-09010 CP argon ion cross-section polisher from JEOL Ltd., Japan); then with reference to JY/T010-1996, the cross-section of the carbon material is scanned using a scanning electron microscope (e.g., a Sigma 300 scanning electron microscope from ZEISS, Germany); finally, the total pore area S1 of the external region and the total pore area S2 of the internal region in the carbon material are acquired using image processing software (e.g., AVIZO), so as to give the value of S2/S1. Illustratively, samples may be obtained from different regions of a negative electrode plate in a secondary battery, at least 5 (e.g., 5, 10, 15, or even more) positions are randomly selected from the sample to acquire the cross-sections by using a cross-section polisher. The cross-sections of at least 10 particles (e.g., 10, 20, 50, or even more particles) are randomly selected from scanning electron microscope images of the cross-sections, and the total pore area S2' of the internal region and the total pore area S1' of the external region of each particle cross-section are acquired by using image processing software according to the above definition, thereby obtaining the value of S2'/S1' of each particle cross-section. The arithmetic mean value of S2'/S1' of all measured particle cross-sections is calculated as the S2/S1 value of the first carbon-based material.

In the present disclosure, the I_{D}/I_{G} value of the material (e.g., the first carbon-based material, the second carbon-based material, etc.) may be tested using a Raman spectrometer, where the I_{D} denotes the D peak intensity at 1350 ± 50 cm⁻¹ in the Raman spectrum of the material, and the I_{G} denotes the G peak intensity at 1580 ± 50 cm⁻¹ in the Raman spectrum of the material. The test conditions are: an excitation wavelength of 532 nm, a grating of 600 reticles, an objective lens of 50 folds, an integration time of 10 s, a total of 3 times, and plane scanning. The D peak and G peak intensities of 100 points are acquired, and the I_{D}/I_{G} values of the 100 points are calculated. 25 maximum and minimum I_{D}/I_{G} values are removed, and the average value of the remaining 50 points is the I_{D}/I_{G} of the material. The Horiba LabRAM HR800 Raman spectrometer may be used as the test instrument.

In the present disclosure, the interlayer spacing of the 002 crystal plane of the material (e.g., the first carbon-based material or the second carbon-based material) has a meaning well known in the art, and can be measured using instruments and methods known in the art. For example, an X-ray diffractometer (e.g., Bruker D8 Discover) may be used for the measurement. The measurement may be performed with reference to JIS K 0131-1996 and JB/T 4220-2011 to obtain the interlayer spacing of the C(002) crystal plane in the crystal structure of the material.

In the present disclosure, the degree of graphitization of the material (e.g., the first carbon-based material or the second carbon-based material) has a meaning well known in the art, and can be measured using instruments and methods known in the art. For example, an X-ray diffractometer (e.g., Bruker D8 Discover) may be used for the measurement. The measurement may be performed with reference to JIS K 0131-1996 and JB/T 4220-2011 to give the average interlayer spacing d ₀₀₂ of the C(002) crystal plane in the crystal structure of the material, and then the degree of graphitization is calculated according to the formula g = (0.344 - d₀₀₂)/(0.344 - 0.3354) × 100%. In the above equation, d₀₀₂ is the average interlayer spacing of the C(002) crystal plane in the material crystal structure in nanometers (nm).

In the present disclosure, both the primary particle and the secondary particle have meanings well known in the art. The primary particle refers to a particle in a non-agglomerated state. The secondary particle refers to a particle in an agglomerated state formed by the aggregation of two or more primary particles. The primary particle and the secondary particle can be distinguished by using scanning electron microscope (SEM) images.

In the present disclosure, taking the first carbon-based material as an example, the number proportion of the primary particles in the first carbon-based material and/or the second carbon-based material is determined as follows: A test sample is randomly selected from the negative electrode film layer, a plurality of test regions are randomly selected from the test sample, and images of the plurality of test regions are acquired using a scanning electron microscope. The number proportion of the first carbon-based materials exhibiting a primary particle morphology in the total number of the particles of the first carbon-based material is counted in each image. The average value of the plurality of statistical results is taken as the number proportion of the primary particles in the first carbon-based material.

In the present disclosure, whether the coating layer is present on the surface of the material (e.g., the first carbon-based material, the second carbon-based material, etc.) can be determined by a transmission electron microscope.

In the present disclosure, the specific surface area of the material (e.g., the first carbon-based material, the second carbon-based material, etc.) has a meaning well known in the art, and can be measured using instruments and methods known in the art. For example, the specific surface area of the material can be measured using the analysis and test method of specific surface area by nitrogen adsorption with reference to GB/T 19587-2017, and calculated by the BET (Brunauer Emmett Teller) method. The test instrument may be the Tri-Star 3020 specific surface area pore size analysis tester from Micromeritics, USA.

In the present disclosure, the volume distribution particle sizes Dv10, Dv50, and Dv90 of the materials (e.g., the first carbon-based material, the second carbon-based material, etc.) have meanings well known in the art, which respectively represent the particle sizes corresponding to the cumulative volume distribution percentages of the material reaching 10%, 50%, and 90%, and can be measured using instruments and methods known in the art. For example, a laser particle size analyzer may be used for the measurement with reference to GB/T 19077-2016. The test instrument may be the Mastersizer 3000 laser particle size analyzer from Malvern Instruments Ltd., United Kingdom.

In the present disclosure, the specific capacity of the material (e.g., the first carbon-based material, the second carbon-based material, etc.) has a meaning well known in the art, and can be measured using methods known in the art. An exemplary test method is as follows: The sample powder, a conductive agent carbon black (Super P), and a binder polyvinylidene fluoride (PVDF) are mixed uniformly in a mass ratio of 91.6:1.8:6.6 in a solvent N-methylpyrrolidone (NMP) to give a slurry; the prepared slurry is applied to a surface of a negative electrode current collector copper foil and dried in an oven for later use; ethylene carbonate (EC), ethyl methyl carbonate (EMC), and diethyl carbonate (DEC) are mixed in a volume ratio of 1:1:1 to give an organic solvent, and then LiPF₆ is dissolved in the organic solvent to prepare an electrolytic solution with a concentration of 1 mol/L; then, a CR2430 button battery is assembled using the electrolytic solution in an argon-protected glove box with a metallic lithium foil as the counter electrode and a polyethylene (PE) thin film as the separator; the obtained button battery is left to stand for 12 h, then discharged at a constant current of 0.05 C to 0.005 V at 25 °C, left to stand for 10 min, then discharged at a constant current of 50 µA to 0.005 V, left to stand for 10 min, and then discharged at a constant current of 10 µA to 0.005 V, and then charged at a constant current of 0.1 C to 2 V, and the charging capacity is recorded. The ratio of the charging capacity to the mass of the sample is defined as the specific capacity of the corresponding material (e.g., the first carbon-based material, the second carbon-based material, etc.).

In the present disclosure, the powder compaction density of the material (e.g., the first carbon-based material, the second carbon-based material, etc.) has a meaning well known in the art, and can be measured using instruments and methods known in the art. For example, the measurement may be performed with reference to GB/T 24533-2009 using an electronic compression tester (e.g., UTM7305 electronic compression tester). An exemplary measurement method is as follows: 1 g of sample powder is placed into a mold with a base area of 1.327 cm², the pressure is increased to 50,000 N and held for 30 s, then the pressure is released and held for 10 s, and subsequently the powder compaction density of the material under the pressure of 50,000 N is recorded and calculated.

In the present disclosure, the areal density of the negative electrode film layer has a meaning well known in the art and can be measured using methods known in the art. For example, a single-side coated and cold-pressed negative electrode plate may be used (if a double-side coated negative electrode plate is used, the negative electrode film layer on one side may be wiped off first) and punched into small circular samples with an area of S₁. The sample is weighed, and the weight is recorded as M₁. The negative electrode film layer of the above weighed negative electrode plate is then wiped off, and the weight of the negative electrode current collector is measured and recorded as M₀. The areal density of the negative electrode plate = (M₁ - M₀)/S₁.

In the present disclosure, the compaction density of the negative electrode film layer has a meaning well known in the art and can be measured using methods known in the art. The compaction density of the negative electrode film layer = the areal density of the negative electrode film layer/the thickness of the negative electrode film layer. The thickness of the negative electrode film layer has a meaning well known in the art and can be measured using methods known in the art, for example, using a micrometer (e.g., Mitutoyo293-100, with precision of 0.1 µm).

In the present disclosure, the thickness of the negative electrode film layer has a meaning well known in the art and can be measured using methods known in the art, for example, using a micrometer (e.g., Mitutoyo293-100, with precision of 0.1 µm).

In the X-ray diffraction analysis test of the present disclosure, a copper target may be used as the anode target, a CuKα ray is used as the radiation source, the ray wavelength λ = 1.5418 Å, the scanning 2θ angle range is 20° to 80°, and the scanning rate is 4°/min.

It should be noted that various parameter tests for the negative electrode active material or the negative electrode film layer described above may be performed by sampling from a prepared secondary battery according to the following steps.

The secondary battery is subjected to a discharge process (for safety reasons, the secondary battery is typically in a fully discharged state). After disassembly of the secondary battery, the negative electrode plate is extracted and immersed in dimethyl carbonate for a certain period (e.g., 2 h to 10 h). The negative electrode plate is then removed and subjected to a drying process at a certain temperature for a certain duration (e.g., 60 °C for more than 4 h). After drying, the negative electrode plate is collected. At this point, samples can be taken from the dried negative electrode plate to test the above parameters related to the negative electrode film layer, such as the areal density, compaction density, porosity, OI value, and thickness of the negative electrode film layer.

The dried negative electrode plate described above is then baked at a certain temperature for a certain duration (e.g., 400 °C for more than 2 h). From the baked negative electrode plate, a region is randomly selected, and sampling of the negative electrode active material is performed (e.g., using a blade to scrape for powder collection). The collected negative electrode active material is sieved (e.g., using a 200-mesh sieve), so as to ultimately give samples that can be used to test the negative electrode active material parameters described above.

In the present disclosure, the first carbon-based material and the second carbon-based material described above are commercially available, or may be prepared by the following method of the present disclosure.

In some embodiments, the preparation method of the first carbon-based material includes: step 1, providing a raw material having a plurality of pore structures; step 2, uniformly mixing the above raw material and a filling material according to a predetermined proportion, holding the mixture at a first temperature T₁ for a first duration t₁, and then cooling the mixture to room temperature to give an intermediate; and step 3, holding the obtained intermediate at a second temperature T₂ for a second duration t₂, so as to give the first carbon-based material. The first carbon-based material has a pore structure, and with the total pore area of the external region being denoted as S1 and the total pore area of the internal region being denoted as S2, the first carbon-based material satisfies S2 > S1.

In some embodiments, in step 1, the raw material for preparing the first carbon-based material includes natural graphite. Natural graphite generally refers to graphite naturally formed in nature, which does not require graphitization, and the interior of the natural graphite particles usually contains a large number of closed pore structures. Optionally, the natural graphite includes one or more of flake graphite, natural spherical graphite, and microcrystalline graphite, and particularly includes natural spherical graphite.

The "natural spherical graphite" refers to a natural graphite having a spherical or spheroidal shape, and not all natural graphite particles are controlled to be ideal spheres. In some embodiments, flake graphite may be pretreated to give natural spherical graphite with a desired particle size and desired morphology. Optionally, the above pretreatment includes processes such as crushing, classification, spheroidization, and purification.

In some embodiments, in step 1, the volume distribution particle size Dv50 of the above raw material may be 6.0 µm to 25.0 µm.

In some embodiments, in step 1, the specific surface area of the above raw material may be ≥ 2.5 m²/g, optionally 2.5 m²/g to 10.0 m²/g. When the specific surface area of the raw material is within the above range, it is beneficial to performing subsequent filling treatment and acquiring a first carbon-based material with a desired specific surface area.

In some embodiments, in step 2, the softening point temperature of the above filling material is 90 °C to 150 °C. Optionally, the softening point temperature of the filling material is 94 °C to 146 °C, 94 °C to 142 °C, 94 °C to 138 °C, 94 °C to 134 °C, 94 °C to 130 °C, 104 °C to 146 °C, 104 °C to 142 °C, 104 °C to 138 °C, 104 °C to 134 °C, or 104 °C to 130 °C.

In some embodiments, in step 2, the volume distribution particle size Dv50 of the above filling material is less than or equal to 6 µm, optionally 1 µm to 6 µm, 1 µm to 5 µm, 2 µm to 5 µm, or 3 µm to 5 µm. Therefore, it is beneficial to filling the pore structure of the raw material with molten filling materials and to improving the dispersion uniformity of the filling materials and the raw material.

In some embodiments, in step 2, the coke yield of the above filling material is 15% to 40%, optionally 18% to 34%. In the present disclosure, the coke yield of the filling material has a meaning well known in the art and can be measured by instruments and methods known in the art. For example, the test may be performed with reference to the standard GB/T 8727-2008.

In some embodiments, in step 2, the above filling material includes one or more of coal pitch, petroleum pitch, polymer compound, and resin, and optionally includes one or more of coal pitch and petroleum pitch.

In some embodiments, in step 2, the mass ratio of the above filling material to the above raw material is (10-40):100, optionally (10-30):100, (10-25):100, (10-20):100, (12-30):100, (14-28):100, or (15-25):100.

In step 2, the adjustment of one or more parameters of the filling material such as the type, the softening point, the coke yield, and the addition amount within the above ranges can help adjust the number and/or size of pores in the external region and the internal region of the first carbon-based material within an appropriate range, thereby facilitating the adjustment of S₂/S₁ of the first carbon-based material within an appropriate range.

By adjusting parameters such as the type, the softening point, the coke yield, and the addition amount of the filling material within the above ranges, the molten filling material may have low viscosity and good fluidity and is less likely to bond the raw material particles, such that the agglomeration of the raw material particles in the subsequent preparation process can be reduced, thereby further reducing problems such as an increase in surface defects and an increase in surface active sites of the first carbon-based material particles due to the need to add a depolymerization process.

In some embodiments, in step 2, the heating process of heating a uniform mixture of the above raw material and the above filling material in a predetermined ratio to the first temperature T₁ may be a staged heating process.

In some embodiments, the above staged heating process includes a first heating process, a second heating process, and a third heating process.

In some embodiments, the above first heating process is to raise the temperature to 200 °C to 250 °C and hold the temperature for 0.5 h to 3 h.

In some embodiments, the above second heating process is to raise the temperature to 450 °C to 550 °C and hold the temperature for 0 h to 2 h. When the holding time is 0 h, it means that when the temperature is raised to a range of 450 °C to 550 °C, no holding process is conducted, and the temperature continues to be raised to the first temperature T₁.

In some embodiments, the above third heating process is to raise the temperature to the first temperature T₁ and hold the temperature for the first duration t₁.

In the staged heating process, the temperature is first raised to 200 °C to 250 °C. Since the heating temperature is higher than the softening point temperature of the filling material, in this case, the filling material melts and softens upon heating, and a holding time of 0.5 h to 3 h allows the filling material to flow and fill the pore structure of the raw material; when the temperature is raised to 450 °C to 550 °C, the molten and softened filling material undergoes a carbonization reaction and gradually forms a semi-coke state to become a viscous liquid or solid, thereby preventing the filling material from entering all of the pore structures of the raw material; finally, when the temperature is raised to the first temperature, the filling material undergoes a carbonization reaction, thereby enabling the pore structures occupied by the filling material to be effectively filled.

In some embodiments, in step 2, the temperature is raised to the above first temperature T₁ at a rate of 1 °C/min to 10 °C/min. For example, the heating rate may be 1 °C/min, 2 °C/min, 3 °C/min, 4 °C/min, 5 °C/min, 6 °C/min, 7 °C/min, 8 °C/min, 9 °C/min, 10 °C/min, or in a range formed by any of the above values. Optionally, the heating rate is 1.5 °C/min to 8 °C/min, 1.5 °C/min to 6 °C/min, 2 °C/min to 6 °C/min, or 2 °C/min to 5 °C/min.

In some embodiments, the heating rate of the above first heating process may be 1 °C/min to 10 °C/min, optionally 1.5 °C/min to 8 °C/min, 1.5 °C/min to 6 °C/min, 2 °C/min to 6 °C/min, or 2 °C/min to 5 °C/min. In some embodiments, the heating rate of the above second heating process may be 1 °C/min to 10 °C/min, optionally 2 °C/min to 8 °C/min. In some embodiments, the heating rate of the above third heating process may be 1 °C/min to 10 °C/min, optionally 2 °C/min to 8 °C/min.

In some embodiments, in step 2, the above first temperature T₁ is 700 °C to 1200 °C. For example, the first temperature T₁ may be 700 °C, 750 °C, 800 °C, 850 °C, 900 °C, 950 °C, 1000 °C, 1050 °C, 1100 °C, 1200 °C, or in a range formed by any of the above values. Optionally, the above first temperature T₁ is 750 °C to 1100 °C, 800 °C to 1100 °C, 850 °C to 1100 °C, 900 °C to 1100 °C, or 850 °C to 1000 °C.

In some embodiments, in step 2, the above first duration t₁ is 1 h to 5 h. For example, the first duration t₁ may be 1 h, 1.5 h, 2 h, 2.5 h, 3 h, 3.5 h, 4 h, 4.5 h, 5 h, or in a range formed by any of the above values. Optionally, the above first duration t₁ is 2 h to 4 h.

In some embodiments, in step 2, the thermal treatment may be performed in a medium-frequency furnace, a roller kiln, a rotary kiln, a pusher kiln, a vertical pellet mill, a horizontal pellet mill, a vertical reaction kettle, a horizontal reaction kettle, a drum furnace, or other temperature-programmable devices.

In some embodiments, in step 2, the thermal treatment atmosphere may be a protective gas atmosphere. The above protective gas may include one or more of nitrogen, argon, and helium.

In step 2, by adjusting one or more of the heating rate, the first temperature, the first duration, the heating process, and the like within the above ranges, it is beneficial to adjusting the number and/or size of pores in the external region and the internal region of the first carbon-based material within an appropriate range, thereby facilitating the adjustment of S₂/S₁ of the first carbon-based material within an appropriate range.

In some embodiments, in step 3, the above second temperature T₂ is 2070 °C to 2700 °C. Optionally, the above second temperature T₂ is 2070 °C to 2570 °C, 2070 °C to 2510 °C, 2070 °C to 2450 °C, 2070 °C to 2360 °C, 2140 °C to 2570 °C, 2140 °C to 2510 °C, 2140 °C to 2450 °C, or 2140 °C to 2360 °C.

In some embodiments, in step 3, the above second duration t₂ is 1.5 h to 6 h. For example, the second duration t₁ may be 2 h, 2.5 h, 3 h, 3.5 h, 4 h, 4.5 h, 5 h, 5.5 h, 6 h, or in a range formed by any of the above values. Optionally, the above second duration t₂ is 2 h to 5 h.

In some embodiments, in step 3, the above thermal treatment may be performed in a medium-frequency furnace, a box-type graphitization furnace, an Acheson graphitization furnace, a continuous graphitization furnace, or an internal series graphitization furnace.

When the second temperature T₂ and the second duration t₂ fall within the above ranges, it is beneficial to adjusting the I_{D}/I_{G} of the first carbon-based material and beneficial for the first carbon-based material to have a stable structure. Generally, a higher second temperature and/or a longer second duration may lead to a smaller I_{D}/I_{G} of the first carbon-based material.

In some embodiments, in step 3, the medium-frequency furnace and the continuous graphitization thermal treatment atmosphere may be a protective gas atmosphere. The above protective gas may include one or more of nitrogen, argon, and helium.

In step 3, by adjusting one or more of the second temperature and the second duration within the above ranges, it is beneficial to adjusting the content of disordered carbon in the first carbon-based material within an appropriate range, thereby helping the first carbon-based material to achieve an appropriate degree of graphitization, interlayer spacing, I_{D}/I_{G}, and the like.

In the above preparation method for the first carbon-based material, by adjusting one or more of the parameters of the natural graphite, the parameters of the filling material, the heating rate, the first temperature, the first duration, the heating process, the second temperature, the second duration, and the like within the above ranges, it is beneficial to adjusting the parameters of the first carbon-based material, such as S₂/S₁, I_{D}/I_{G}, degree of graphitization, specific capacity, specific surface area, particle size, interlayer spacing of the 002 crystal plane, powder compaction density, tap density, etc.

In some embodiments, the preparation method of the artificial graphite in the above second carbon-based material includes: step 11, providing a raw material; step 12, crushing and shaping the raw material to give a first intermediate; and step 13, graphitizing the first intermediate to give the second carbon-based material. The second carbon-based material satisfies I_{D}/I_{G} ≤ 0.140.

In some embodiments, in step 11, the raw material may include one or more of petroleum coke, needle coke, pitch coke, and metallurgical coke.

In some embodiments, in step 12, the raw material may be crushed using a mechanical mill or a roller mill. In addition, the shaping process may be performed using a shaper.

In some embodiments, in step 13, the temperature of the graphitization is 2800 °C to 3200 °C.

By adjusting the temperature of the graphitization and/or the duration of the graphitization, the second carbon-based material may achieve an appropriate I_{D}/I_{G} value and degree of graphitization.

In the above preparation method for the second carbon-based material, by adjusting one or more of the parameters of the devices (e.g., the mechanical mill or the roll mill, the shaper, or a pelletizer), the raw material, the addition amount of the organic carbon source, the addition amount of the binder, the graphitization temperature, the graphitization time, the carbonization temperature, the carbonization time, and the like, it is beneficial to adjusting the parameters of the second carbon-based material, such as the interlayer spacing of the 002 crystal plane, I_{D}/I_{G}, degree of graphitization, specific capacity, volume distribution particle size, specific surface area, powder compaction density, and tap density, etc.

### [Positive Electrode Plate]

The positive electrode plate includes a positive electrode current collector and a positive electrode film layer arranged on at least one surface of the positive electrode current collector, and the positive electrode film layer includes the positive electrode active material according to the first aspect of the present disclosure.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, when the battery cell is a lithium-ion battery, a positive electrode active material for use in lithium-ion batteries known in the art may be used as the positive electrode active material. As an example, the positive electrode active material may include at least one of the following materials: a lithium-containing phosphate with an olivine structure, a lithium transition metal oxide, and respective modified compounds thereof. However, the present disclosure is not limited to these materials, and other conventional materials that can be used as the positive electrode active material in batteries may also be used. These positive electrode active materials may be used alone or in a combination of two or more. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof. Examples of the lithium-containing phosphate with an olivine structure may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

For other active ion batteries, such as sodium-ion batteries, the positive electrode active material may include a well known positive electrode active material for use in sodium-ion batteries. For example, the positive electrode active material includes at least one of a sodium transition metal oxide, a polyanionic compound, and a Prussian blue compound.

As Li undergoes deintercalation and consumption in the charging and discharging process of the battery, the molar content of Li varies when the battery is discharged to different states. In the enumeration related to the positive electrode active material in the present disclosure, the molar content of Li is in an initial state in the material, i.e., a pre-feeding state, and when the positive electrode active material is applied to a battery system, the molar content of Li varies after charging and discharging cycles.

In the enumeration related to the positive electrode active material in the present disclosure, the molar content of oxygen is only a theoretical value. The molar content of oxygen will vary due to oxygen release from the crystal lattice, and actually, the molar content of oxygen will fluctuate. Other elements may also vary in molar content after the battery is manufactured and in use. Therefore, the molar ratios of the elements in the molecular formula of the positive electrode active material are molar ratios during preparation.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Electrolyte]

The electrolyte conducts ions between the positive electrode plate and the negative electrode plate. The type of the electrolyte is not specified in the present disclosure, and can be determined as desired. For example, the electrolyte may be liquid, gel, or all solid.

In some embodiments, the electrolyte is an electrolytic solution. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery and an additive for improving the high- or low-temperature performance of the battery.

### [Separator]

In some embodiments, the battery cell further includes a separator. The type of the separator is not specified in the present disclosure, and any known porous-structure separator with good chemical stability and mechanical stability may be selected.

In some embodiments, the separator may be made of a material selected from at least one of glass fiber, non-woven fabric, polyethylene, polypropylene, and polyvinylidene fluoride. The separator may be a single-layer film or a multi-layer composite film, and there is no particular limitation on this. When the separator is a multi-layer composite film, the materials of the layers may be the same or different, and there is no particular limitation on this.

In some embodiments, the positive electrode plate, the negative electrode plate, and the separator may be manufactured into an electrode assembly through a winding process or a stacking process.

In some embodiments, the battery cell may include an outer packaging. The outer packaging can be used for packaging the electrode assembly and electrolyte described above.

In some embodiments, the outer packaging of the battery cell may be a hard housing, such as a hard plastic housing, an aluminum housing, or a steel housing. The outer packaging of the battery cell may also be a soft pack, such as a pouch-type soft pack. The soft pack may be made of plastic, and examples of the plastic may include polypropylene, polybutylene terephthalate, polybutylene succinate, and the like.

The shape of the battery cell is not specified in the present disclosure, and may be cylindrical, prismatic, or any other shape. For example, FIG. 3 shows a battery cell 5 having a prismatic structure as an example.

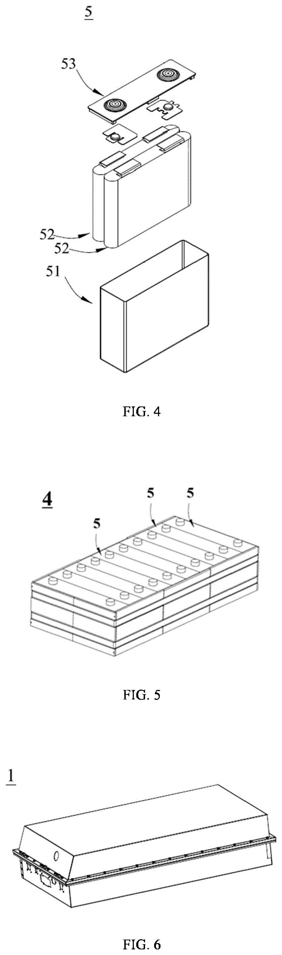

In some embodiments, referring to FIG. 4, the outer packaging may include a housing 51 and a top cover assembly 53. The housing 51 may include a bottom plate and side plates connected to the bottom plate, and the bottom plate and the side plates define, in an enclosing manner, an accommodating cavity. The housing 51 is provided with an opening in communication with the accommodating cavity, and the top cover assembly 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution is infiltrated into the electrode assembly 52. The number of the electrode assembly 52 included in the battery cell 5 may be one or more, and those skilled in the art can select the number according to specific and actual requirements.

In some embodiments, the battery cell may be assembled into a battery module. The number of battery cells included in the battery module may be one or more, and the specific number may be selected by those skilled in the art based on the use and capacity of the battery module.

FIG. 5 shows a battery module 4 as one example. Referring to FIG. 5, in the battery module 4, a plurality of battery cells 5 may be sequentially disposed in the length direction of the battery module 4. Certainly, the arrangement may also be in any other manner. Further, the plurality of battery cells 5 may be fixed by fasteners.

Optionally, the battery module 4 may further include an outer shell having an accommodating space in which the plurality of battery cells 5 are accommodated.

In some embodiments, the battery module described above may also be assembled into a battery pack. The number of battery modules included in the battery pack may be one or more, and the specific number may be selected by those skilled in the art based on the use and capacity of the battery pack.

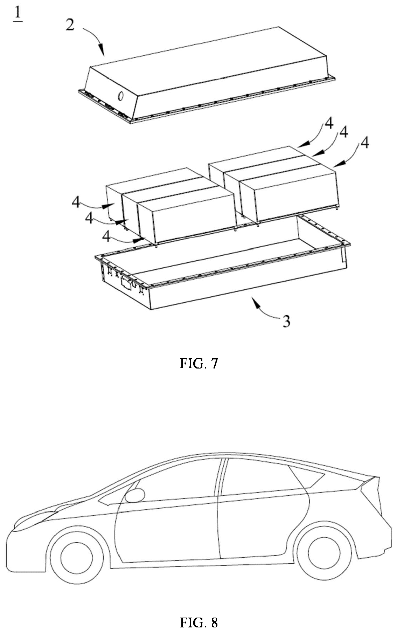

FIGs. 6 and 7 show a battery pack 1 as one example. Referring to FIGs. 6 and 7, the battery pack 1 may include a battery case and a plurality of battery modules 4 disposed in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In addition, a second aspect of the present disclosure further provides an electric device. The electric device includes the secondary battery provided in the above embodiments. The secondary battery may be used as a power source for the electric device, or as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, or a satellite, an energy storage system, or the like.

A battery cell, a battery module, or a battery pack may be selected on the basis of the requirements of the electric device.

FIG. 8 shows an electric device as one example. The electric device is a pure electric vehicle, a hybrid electric vehicle, a plug-in hybrid electric vehicle, or the like. To meet the requirements of the electric device for high power and high energy density of the secondary battery, a battery pack or a battery module may be used.

As another example, the device may be a mobile phone, a tablet computer, a laptop computer, or the like. The device is generally required to be light and thin, and a battery cell may thus be used as the power source.

### Examples

The examples of the present disclosure are illustrated hereinafter. The embodiments described below are exemplary and are merely used to explain the present disclosure, and they should not be construed as limiting the present disclosure. The examples without techniques or conditions specified therein are implemented according to techniques or conditions described in the literature in the art or according to product instructions. Reagents or instruments used herein without specified manufacturers are all commercially available conventional products.

In the following examples and comparative examples, the first carbon-based material used may be prepared by the following method of the present disclosure.

### Preparation of material 1-1:

The flake graphite was mechanically crushed, classified, spheroidized, and purified to obtain natural spherical graphite. The natural spherical graphite had a volume distribution particle size Dv50 = 16.7 µm. The acquired natural spherical graphite and a filler petroleum pitch having a softening point of 135 °C were mixed in a mass ratio of 100:20. The mixed material was then placed in a temperature-programmable device, heated to 680 °C (first treatment temperature) and held for 2.5 h, and cooled to room temperature to give an intermediate. The obtained intermediate was placed in a graphitization furnace and subjected to a thermal treatment (second treatment temperature) at 2450 °C, and then subjected to demagnetization and sieving to give material 1-1. Material 1-1 satisfied: S2/S1 = 7.9, I_{D}/I_{G} = 0.17, the volume distribution particle size Dv50 = 17.0 µm, and the degree of graphitization was 97%.

### Preparation of materials 1-2 and 1-3:

The preparation method of materials 1-2 and 1-3 was similar to that of material 1, except that: the ratio of natural spherical graphite to the filler and the first treatment temperature were adjusted, so as to give materials 1-2 and 1-3. Details are as follows:

**Table 1**

| Material Number | Ratio of natural spherical graphite to filler | First treatment temperature (°C) | S2/S1 |
|---|---|---|---|
| 1-1 | 100:20 | 610 | 7.9 |
| 1-2 | 100:29 | 540 | 200.8 |
| 1-3 | 100:35 | 310 | 449.8 |

### Preparation of material 1-4:

Natural spherical graphite was provided and mixed thoroughly with petroleum pitch having a softening point of 250 °C in a mass ratio of 100:6. A low-temperature thermal treatment at 1100 °C was performed for 2 h to give a natural graphite with a carbon coating layer, i.e., material 1-4. Material 1-4 satisfied: S2/S1 = 0.8, I_{D}/I_{G} = 0.36, the volume distribution particle size Dv50 = 17.8 µm, and the degree of graphitization was 97%.

### Preparation of material 2-1:

A needle coke raw material was provided, crushed by a roll mill, and shaped by a shaper to give a first intermediate. The first intermediate was graphitized in a graphitization furnace at a temperature of 3050 °C for 6 h. Thus, material 2-1 was obtained. Material 2-1 satisfied: I_{D}/I_{G} = 0.12, the volume distribution particle size Dv50 = 16.0 µm, the BET specific surface area = 1.05 m²/g, and the degree of graphitization was 95.0%.

### Preparation of materials 2-2 to 2-4:

The preparation method of materials 2-2 to 2-4 was similar to that of material 1, except that: the graphite to the filler and the first treatment temperature were adjusted, so as to adjust the I_{D}/I_{G} of materials 2-2 to 2-4. Details are as follows:

**Table 2**

| Material Number | Thermal treatment temperature (°C) | I_{D}/I_{G} |
|---|---|---|
| 2-1 | 3000 | 0.12 |
| 2-2 | 3230 | 0.10 |
| 2-3 | 2850 | 0.14 |
| 2-4 | 2580 | 0.17 |

### Example 1

### Preparation of secondary battery:

1. Negative electrode plate: A negative electrode active material (70 wt% of material 1-1 and 30 wt% of material 2-1), a conductive agent carbon black (Super P), a thickener sodium carboxymethylcellulose, and a binder styrene-butadiene rubber were thoroughly stirred and mixed in an appropriate amount of solvent deionized water according to a weight ratio of 96.4:1:1.2:1.4 to form a negative electrode slurry. The negative electrode slurry was applied on two surfaces of a negative electrode current collector copper foil, and the copper foil was then subjected to drying and cold pressing to give the negative electrode plate.
2. Positive electrode plate: LiFePO₄, a conductive agent carbon black (Super P), and a binder polyvinylidene fluoride were mixed in a mass ratio of 96:2:2, before a proper amount of solvent N-methylpyrrolidone (NMP) was added. The mixture was stirred thoroughly to give a positive electrode slurry. The positive electrode slurry was applied on two surfaces of a positive electrode current collector aluminum foil, and the aluminum foil was then subjected to drying and cold pressing to give the positive electrode plate.
3. Electrolytic solution: Ethylene carbonate (EC), ethyl methyl carbonate (EMC), and diethyl carbonate (DEC) were mixed in a volume ratio of 1:1:1 to give an organic solvent. Then, LiPF₆ was dissolved in the above organic solvent to prepare an electrolytic solution with a concentration of 1 mol/L. Then, vinylene carbonate (VC) was added, and the content of VC was 1% of the total mass of the electrolytic solution.
4. Separator: A polypropylene film was used.
5. Preparation of secondary battery: The positive electrode plate and the negative electrode plate prepared above were stacked in sequence to dispose the separator between the positive electrode plate and the negative electrode plate for isolation, and then the stack was wound to give an electrode assembly. The electrode assembly was placed in an outer packaging and dried, and then the electrolytic solution was injected. After undergoing processes such as vacuum packaging, standing, formation, and shaping, a secondary battery was obtained.

### Examples 2 and 3

The battery preparation methods of Examples 2 and 3 were similar to that of Example 1, except that: materials 1-2 and 1-3 were selected as the first carbon-based material, respectively, as detailed in Table 1.

### Comparative Example 1

The preparation method was similar to that of Example 1, except that: material 1-4 was selected as the first carbon-based material, as detailed in Table 1.

### Comparative Example 2

The preparation method was similar to that of Example 1, except that: only the first carbon-based material (material 1-1 above) used in Example 1 was included in the negative electrode active material. The secondary battery was assembled according to the method described above.

### Comparative Example 3

The preparation method was similar to that of Example 1, except that: only the second carbon-based material (material 2-1 above) used in Example 1 was included in the negative electrode active material. The secondary battery was assembled according to the method described above.

### Performance Test

### 1. Material testing

The S1/S of the first carbon-based material was measured by the following method.

The binder for sample preparation was mixed uniformly with the first carbon-based material powder and then applied to a copper foil, and the copper foil was dried at 60 °C for 30 min for later use. Five samples to be measured with a size of 6 mm × 6 mm were cut from five different positions and respectively pasted on a sample stage of a CP-type argon ion cross-section polisher. The samples were cut using a plasma beam to give the cross sections of each sample. The test instrument was an IB-09010 CP argon ion cross-section polisher supplied by JEOL Ltd., Japan.

A scanning electron microscope was used to scan the cross-sections of the sample of the first carbon-based material, and scanning images were acquired from randomly selected regions of the sample cross-sections. For the test, reference may be made to JY/T010-1996. The test instrument was the Sigma 300 SEM from ZEISS, Germany.

Cross-sections of 20 particles of the first carbon-based material were randomly selected from the scanning images. The region extending from the surface of the particle of the first carbon-based material to the interior of the particle by a distance of 0.25 µm was denoted as the external region, and the region inside the external region was denoted as the internal region. The total pore area S1' of the external region of each particle cross-section and the pore area S2' of the internal region of the first carbon-based material were acquired using image processing software, and the value of S2'/S1' was calculated. The arithmetic mean value of S2'/S1' for all 20 particles was calculated as the S2/S1 value of the first carbon-based material. The image processing software was AVIZO.

### 2. Battery performance test

### (1) Storage performance test of secondary battery

At 25 °C, the secondary batteries prepared above were charged at a constant current of 1 C to 3.65 V, and then charged at a constant voltage until the current was 0.05 C. After being left to stand for 5 min, the secondary batteries were discharged at a constant current of 1 C to 2.5 V. The discharging capacity at this point was recorded as the discharging capacity before storage.

At 25 °C, the secondary batteries prepared above were charged at a constant current of 1 C to 3.65 V, and then charged at a constant voltage until the current was 0.05 C. Then, the secondary battery was stored in an incubator at 60 °C for 240 days. Capacity retention rate (%) of the secondary battery stored at 60 °C for 240 days = discharging capacity after storage/discharging capacity before storage × 100%.

### (3) Energy density of secondary battery

At 25 °C, the secondary battery was charged at a constant current of 1/3 C to 3.65 V, and then charged at a constant voltage of 3.65 V until the current was 0.05 C. The secondary battery was left to stand for 5 min, and then discharged at a constant current of 1/3 C to 2.5 V. The discharge energy of the battery at this point was recorded. The discharging energy of the battery divided by the volume of the battery was defined as the volumetric energy density of the battery, expressed in Wh/L. The measurement data were detailed in Table 1.

### (3) Initial coulombic efficiency of negative electrode

At 45 °C, the secondary battery prepared above was first charged to 20% SOC at a constant current of 0.02 C for the initial efficiency, and the charging capacity was denoted as C0; the temperature was lowered to 25 °C, the battery was left to stand for 30 minutes, then discharged to 2.5 V at a constant current of 0.2 C, and the discharging capacity was denoted as D0; the battery was left to stand for 5 minutes, charged to 3.65 V at a constant current of 1/3 C, then charged to 0.05 C at a constant voltage, and the charging capacity was denoted as C1; the battery was left to stand for 5 minutes, then discharged to 2.5 V at a constant current of 1/3 C, and the discharging capacity was denoted as D1.$Initial coulombic efficiency \left(%\right) of secondary battery = D 1 / \left(C0+C1-D1\right) \times 100 %$

The batteries prepared in Examples 1 to 3 and Comparative Examples 1 to 3 were tested according to the above test methods (1) to (3), and the negative electrode active materials used and the test results are shown in Table 3.

**Table 3**

| Serial number | **First carbon-based material** | | **Second carbon-based material** | | **Negative electrode** | **Battery performance** | |
|---|---|---|---|---|---|---|---|
| | Material Number | S2/S1 | Material Number | I_{D}/I_{G} | Initial coulombic efficiency | Energy density (Wh/L) | Capacity retention rate (%) after 240-day storage at 60 °C |
| Example 1 | 1-1 | 7.9 | 2-1 | 0.12 | 93.0% | 435.3 | 86.0 |
| Example 2 | 1-2 | 200.8 | 2-1 | 0.12 | 93.4% | 433.9 | 86.5 |
| Example 3 | 1-3 | 449.8 | 2-1 | 0.12 | 93.7% | 434.5 | 87.1 |
| Comparative Example 1 | 1-4 | 0.8 | 2-1 | 0.12 | 90.4% | 427.1 | 83.3 |
| Comparative Example 2 | 1-1 | 7.9 | / | / | 92.6% | 445.0 | 84.5 |
| Comparative Example 3 | / | / | 2-1 | 0.12 | 94.2% | 362.2 | 87.8 |

As can be seen from Table 1 above, according to Comparative Example 2 and Comparative Example 3 in which only the first carbon-based material and the second carbon-based material were used respectively, the first carbon-based material brought good capacity density but low high-temperature storage performance to the secondary battery; the second carbon-based material exhibited good initial coulombic efficiency, which brought superior high-temperature storage performance but a low energy density to the secondary battery. In the present disclosure, when the first carbon-based material and the second carbon-based material are mixed as the negative electrode active material, a good energy density and high-temperature storage performance can be combined in the secondary battery.

As can be seen from Examples 1 to 3 and Comparative Example 1, changing the value of S2/S1 of the first carbon-based material mainly affects the initial coulombic efficiency of the negative electrode and the storage performance of the secondary battery. A greater value of S2/S1 may lead to better high-temperature storage performance. Conversely, when S2 is less than S1 (i.e., the pore area in the internal region of the particle is lower, while the pore area in the external region of the particle is higher), the initial coulombic efficiency and the storage performance decrease.

### Examples 4 and 5

The battery preparation methods of Examples 4 and 5 were similar to that of Example 1, where material 1-1 was used as the first carbon-based material, and materials 2-2 and 2-3 were selected as the second carbon-based material, respectively.

### Comparative Example 4

The battery preparation method of Comparative Example 4 was similar to that of Example 1, except that: material 2-4 was selected as the second carbon-based material.

The batteries prepared in Examples 4 and 5 and Comparative Example 4 were tested according to the above test methods (1) to (3), and the negative electrode active materials used and the test results are shown in Table 4.

**Table 4**

| Serial number | **First carbon-based material** | | **Second carbon-based material** | | **Negative electrode** | **Battery performance** | |
|---|---|---|---|---|---|---|---|
| | Material Number | S2/S1 | Material Number | I_{D}/I_{G} | Initial coulombic efficiency | Energy density (Wh/L) | Capacity retention rate after 240-day storage at 60 °C |
| Example 1 | 1-1 | 7.9 | 2-1 | 0.12 | 93.0% | 435.3 | 86.0% |
| Example 4 | 1-1 | 7.9 | 2-2 | 0.10 | 93.5% | 434.6 | 86.9% |
| Example 5 | 1-1 | 7.9 | 2-3 | 0.14 | 92.8% | 436.5 | 85.7% |
| Comparative Example 4 | 1-1 | 7.9 | 2-6 | 0.17 | 92.7% | 432.5 | 84.9% |

As can be seen from Table 4 above, changing the I_{D}/I_{G} value of the second carbon-based material may affect the surface activity thereof. A greater I_{D}/I_{G} value may result in higher surface activity, which leads to a decrease in the initial coulombic efficiency of the negative electrode and affects the high-temperature storage performance of the secondary battery, but has little impact on the energy density.

### Examples 6 and 7

The battery preparation methods of Examples 6 and 7 were similar to that of Example 1, except that the amounts of the first carbon-based material and the second carbon-based material were changed, as shown in Table 5.

The batteries prepared in Examples 6 and 7 were tested according to the above test methods (1) to (3), and the negative electrode active materials used and the test results are shown in Table 5.

**Table 5**

| Serial number | **First carbon-based material** | | **Second carbon-based material** | | **Negative electrode** | **Battery performance** | |
|---|---|---|---|---|---|---|---|
| | Material Number | Content (Wt%) | Material Number | Content (wt%) | Initial coulombic efficiency | Energy density (Wh/L) | Capacity retention rate after 240-day storage at 60 °C |
| Example 1 | 1-1 | 70 | 2-1 | 30 | 93.0% | 435.3 | 86.0% |
| Example 6 | 1-1 | 50 | 2-1 | 50 | 93.3% | 428.6 | 86.4% |
| Example 7 | 1-1 | 40 | 2-1 | 60 | 93.5% | 419.6 | 86.9% |

It should be noted that the present disclosure is not limited to the embodiments described above. The embodiments described above are merely examples, and any embodiments having a structure substantially identical to the technical concept and exerting the same functional effects within the scope of the technical solutions of the present disclosure are all included within the technical scope of the present disclosure. Furthermore, without departing from the spirit of the present disclosure, various modifications that can be conceived by those skilled in the art to the embodiments, as well as other embodiments formed by combining some of the constituent elements of the embodiments, are also included within the scope of the present disclosure.

## Claims

1. A secondary battery, comprising a negative electrode plate, wherein the negative electrode plate comprises a negative electrode current collector and a negative electrode film layer on at least one surface of the negative electrode current collector, the negative electrode film layer comprises a negative electrode active material, and the negative electrode active material comprises a first carbon-based material and a second carbon-based material,
the first carbon-based material comprises an external region and an internal region located inside the external region, wherein the external region refers to a region extending from the surface of the first carbon-based material to the interior of the particle by a distance of 2.5 µm; in a cross-sectional view of the first carbon-based material, the first carbon-based material has a pore structure, and with the total pore area of the external region being denoted as S1 and the total pore area of the internal region being denoted as S2, the first carbon-based material satisfies S2 > S1;
the second carbon-based material satisfies I_{D}/I_{G} ≤ 0.14, wherein the I_{D} denotes the D peak intensity at 1350 ± 50 cm⁻¹ in a Raman spectrum of the second carbon-based material, and the I_{G} denotes the G peak intensity at 1580 ± 50 cm⁻¹ in the Raman spectrum of the second carbon-based material.

2. The secondary battery according to claim 1, wherein the second carbon-based material satisfies 0.10 ≤ I_{D}/I_{G} ≤ 0.14, optionally, 0.11 ≤ I_{D}/I_{G} ≤ 0.13.

3. The secondary battery according to claim 1 or 2, wherein the I_{D}/I_{G} of the first carbon-based material is greater than the I_{D}/I_{G} of the second carbon-based material.

4. The secondary battery according to any one of claims 1 to 3, wherein the first carbon-based material satisfies I_{D}/I_{G} ≤ 0.30, optionally, 0.15 ≤ I_{D}/I_{G} ≤ 0.28, wherein the I_{D} denotes the D peak intensity at 1350 ± 50 cm⁻¹ in a Raman spectrum of the first carbon-based material, and the I_{G} denotes the G peak intensity at 1580 ± 50 cm⁻¹ in the Raman spectrum of the first carbon-based material.

5. The secondary battery according to any one of claims 1 to 4, wherein the second carbon-based material is artificial graphite.

6. The secondary battery according to any one of claims 1 to 5, wherein
the interlayer spacing of the 002 crystal plane of the first carbon-based material is less than the interlayer spacing of the 002 crystal plane of the second carbon-based material;
optionally, the interlayer spacing of the 002 crystal plane of the first carbon-based material is ≤ 0.33569 nm, optionally 0.33557 nm to 0.33569 nm;
optionally, the interlayer spacing of the 002 crystal plane of the second carbon-based material is ≤ 0.336088 nm, optionally 0.335744 nm to 0.336088 nm.

7. The secondary battery according to any one of claims 1 to 6, wherein the first carbon-based material comprises one or more pore structures with a pore area of greater than or equal to 0.15 µm², and optionally comprises one or more pore structures with a pore area of 0.15 µm² to 2.0 µm².

8. The secondary battery according to any one of claims 1 to 7, wherein the first carbon-based material satisfies: 1.5 ≤ S2/S1 ≤ 450, optionally, 2 ≤ S2/S1 ≤ 400.

9. The secondary battery according to any one of claims 1 to 8, wherein the first carbon-based material comprises a primary particle;
optionally, the number proportion of the primary particle in the first carbon-based material is ≥ 80%;
optionally, the surface of the first carbon-based material has no coating layer.

10. The secondary battery according to any one of claims 1 to 9, wherein the second carbon-based material comprises a primary particle;
optionally, the number proportion of the primary particle in the second carbon-based material is ≥ 80%;
optionally, the surface of the second carbon-based material has no coating layer.

11. The secondary battery according to any one of claims 1 to 10, wherein the degree of graphitization of the first carbon-based material is greater than the degree of graphitization of the second carbon-based material.

12. The secondary battery according to any one of claims 1 to 11, wherein
the degree of graphitization of the first carbon-based material is ≥ 96%, optionally 96.5% to 98.5%;
the degree of graphitization of the second carbon-based material is 91% to 96.5%, optionally 92% to 96%.

13. The secondary battery according to any one of claims 1 to 12, wherein the specific surface area of the first carbon-based material is greater than the specific surface area of the second carbon-based material.

14. The secondary battery according to any one of claims 1 to 13, wherein the specific surface area of the first carbon-based material is less than or equal to 2.1 m²/g, optionally 1.3 m²/g to 2.0 m²/g;
the specific surface area of the second carbon-based material is less than or equal to 1.3 m²/g, optionally 0.8 m²/g to 1.2 m²/g.

15. The secondary battery according to any one of claims 1 to 14, wherein the volume distribution particle size Dv50 of the first carbon-based material is greater than the volume distribution particle size Dv50 of the second carbon-based material.

16. The secondary battery according to any one of claims 1 to 15, wherein the negative electrode active material satisfies at least one of the following:
(1) the volume distribution particle size Dv50 of the negative electrode active material being ≥ 10 µm, optionally 10 µm to 23 µm;
(2) the volume distribution particle size Dv90 of the negative electrode active material being ≤ 40 µm, optionally 23 µm to 40 µm;
(3) the particle size distribution [(Dv90)-(Dv10)]/(Dv50)] of the negative electrode active material being ≤ 1.20, optionally 0.9 to 1.20;
(4) the specific capacity of the negative electrode active material being ≥ 358 mAh/g, optionally 358 mAh/g to 370 mAh/g; and
(5) the negative electrode active material satisfying I_{D}/I_{G} ≤ 0.2, optionally 0.13 to 0.20, wherein the I_{D} denotes the D peak intensity at 1350 ± 50 cm⁻¹ in a Raman spectrum, and the I_{G} denotes the G peak intensity at 1580 ± 50 cm⁻¹ in the Raman spectrum.

17. The secondary battery according to any one of claims 1 to 16, wherein the first carbon-based material satisfies at least one of the following:
(1) the volume distribution particle size Dv50 of the first carbon-based material being ≥ 13 µm, optionally 15 µm to 20 µm;
(2) the volume distribution particle size Dv90 of the first carbon-based material being ≤ 40 µm, optionally 28 µm to 40 µm;
(3) the particle size distribution [(Dv90)-(Dv10)]/(Dv50)] of the first carbon-based material being ≤ 1.55, optionally 0.90 to 1.50; and
(4) the specific capacity of the first carbon-based material being ≥ 360 mAh/g, optionally 365 mAh/g to 372 mAh/g.

18. The secondary battery according to any one of claims 1 to 17, wherein the second carbon-based material satisfies at least one of the following:
(1) the volume distribution particle size Dv50 of the second carbon-based material being ≤ 18 µm, optionally 13 µm to 18 µm;
(2) the particle size distribution [(Dv90)-(Dv10)]/(Dv50)] of the second carbon-based material being ≤ 1.35, optionally 1.0 to 1.30; and
(3) the specific capacity of the second carbon-based material being ≥ 357 mAh/g, optionally 357 mAh/g to 363 mAh/g.

19. The secondary battery according to any one of claims 1 to 18, wherein the mass proportion of the first carbon-based material in the negative electrode active material is ≥ 30 wt%, optionally 50 wt% to 80 wt%.

20. The secondary battery according to any one of claims 1 to 19, wherein the negative electrode active material further comprises a silicon-based material.

21. The secondary battery according to any one of claims 1 to 20, wherein the negative electrode film layer satisfies at least one of the following:
(1) the compaction density of the negative electrode film layer being ≥ 1.40 g/cm³, optionally 1.45 g/cm³ to 1.90 g/cm³;
(2) the areal density of the negative electrode film layer being ≥ 6.0 mg/cm², optionally 7.0 mg/cm² to 15.0 mg/cm²;
(3) the porosity of the negative electrode film layer being 18.0% to 36.7%, optionally 19.0% to 34.0%; and
(4) the thickness of the negative electrode film layer being ≥ 70 µm, optionally 90 µm to 130 µm.

22. An electric device, comprising the secondary battery according to any one of claims 1 to 21.
